# EUROPEAN PATENT APPLICATION

(11) **EP 1 531 301 A1**
(43) Date of publication of application: **18.05.2005**
(21) Application number: 04026456.6
(22) Date of filing: 08.11.2004
(51) Int. Cl.: F17C 11/00

(54) **System and method for generating and storing pressurized hydrogen**

(30) Priority: 13.11.2003 US 712195
(71) Applicant: AIR PRODUCTS AND CHEMICALS, INC., Allentown, PA 18195-1501 (US)
(72) Inventor: Graham, David Ross, Harleysville PA (US); Xu, Jianguo, Wrightstown PA 18940 (US); Meski, George Amir, Allentown PA 18103 (US)
(74) Representative: Schwabe - Sandmair - Marx

(57) **Abstract**

A system and method for the generation of pressurized hydrogen gas without the use of a compressor or significant energy input, for use in for the charging of a metal hydride hydrogen storage unit. A hydrogen gas generator (100) generates pressurized hydrogen gas from the reaction of a chemical hydride with an aqueous solution. The pressurized hydrogen gas is treated in a conditioner (101) prior to storage in a hydrogen storage canister (104).

## Description

### CROSS-REFERENCE TO RELATED APPLICATIONS

Not applicable.

### STATEMENT REGARDING FEDERALLY SPONSORED RESEARCH OR DEVELOPMENT

Not applicable.

### BACKGROUND OF THE INVENTION

The present invention is directed to a system and a method for generating pressurized hydrogen gas and storing the pressurized hydrogen gas in a hydrogen storage canister for use in, for example, a hydrogen fuel cell. More particularly, the present invention is directed to a method of generating pressurized hydrogen without the use of a compressor or significant energy input for use in charging a hydrogen storage unit.

A fuel cell is an electrochemical cell that converts the chemical energy of a fuel directly into electric energy in a continuous process. The overall fuel cell reaction typically involves the combination of hydrogen with oxygen to form water. For example, at 25°C and at 1 atmosphere pressure, the reaction

H₂ +1/2(O₂)=H₂O

takes place with a free energy change (ΔG) of -56.69 kcal/mole. In a galvanic cell, this reaction produces a theoretical cell voltage of 1.23 volts.

The main types of fuel cells used today include proton exchange membrane (PEM) fuel cells, phosphoric acid fuel cells, alkaline fuel cells, solid oxide fuel cells, and molten carbonate fuel cells.

In simple form, a fuel cell consists of two electrodes, an anode and a cathode, separated from one another by an electrolyte or ion-conducting membrane. Oxygen is fed over the cathode and hydrogen is fed over the anode, generating electricity as well as heat and water. Fuel cells are environmentally friendly due to the near absence of emission of nitrogen oxides, sulfur oxides, hydrocarbons, carbon monoxide etc.

Fuel cells have the benefit of being compact and can be operated at a temperature close to that of the surrounding atmosphere. They have the additional benefit of being able to generate large amounts of energy compared to conventional batteries. However, one problem associated with fuel cells is how to supply the fuel cell with hydrogen.

Several methods for the storage of hydrogen are currently known. One method involves the use of liquid hydrogen at low temperature. However, liquid hydrogen can vaporize due to heat leak. Another method for the storage of hydrogen is by the use of compressed hydrogen gas, for example, hydrogen gas at a pressure of about 2000 psig.

Electrolytic methods may also be used to supply hydrogen gas to hydrogen storage canisters. Electrolysis involves splitting molecules of water to form molecules of hydrogen and oxygen. To bring about the splitting of the water molecules, an anode and a cathode are positioned in a water source, and a direct current is applied. Hydrogen is generated at the cathode and oxygen is generated at the anode. The hydrogen produced by electrolysis is typically at atmospheric pressure, and a compressor is required to compress the hydrogen for storage in pressurized containers. The use of electrolysis to supply hydrogen is limited due to the need for an energy source to supply direct current to bring about the electrolytic decomposition of water. In addition, in order to store hydrogen gas produced by electrolytic methods, a compressor may be required to compress the hydrogen to a pressure suitable for its storage.

United States Patent Application Publication No. 2002/0100682 discloses a hydrogen recharging system for a metal hydride storage canister for a fuel cell. A water reservoir provides water to an electrolyzer, which converts the water to hydrogen gas and oxygen gas. The electrolyzer is powered by a direct current power source. The hydrogen gas is stored in an accumulator. While the pressure generated by the production of hydrogen gas can be used to 'pump' the hydrogen gas into the accumulator, the pressure is limited, and a mechanical compressor is required for the compression and storage of any significant amount of hydrogen gas at pressures above those generated by the electrolyzer.

United States Patent No. 5,512,145 discloses a method and apparatus for converting water to hydrogen gas and oxygen gas by use of an electrically powered electrolyzer. The hydrogen gas is purified and then collected in a hydrogen storage tank at pressures produced by the electrolyzer. The pressure produced is disclosed as being preferably in the range of 0-100 psig.

It is also known to generate hydrogen by the use of reactive chemical materials. For example, United States Patent No. 3,174,833 discloses a device for the generation of hydrogen gas for supply to a fuel cell. The device disclosed comprises two compartments, an upper compartment containing a chemical hydride and a lower compartment containing an aqueous solution. On application of pressure, the aqueous solution flows into the upper compartment and effects the generation of hydrogen gas. The flow rate of the aqueous solution is controlled by a valve located between the two compartments. The valve, in turn, is controlled by the hydrogen gas pressure, thus providing a constant pressure flow.

United States Patent Application Publication No. 2003/0037487 discloses a hydrogen generator system wherein a chemical hydride solution contacts a catalyst resulting in the generation of hydrogen gas. A pump is used to drive the chemical hydride solution from its container to the catalyst system. The pump can be activated or deactivated to control the pressure of the system. The system is disclosed to have an operating pressure of 32 psig.

Thus, while methods exist for the generation of hydrogen gas, there remains a need for an improved method and system for the generation and storage of hydrogen gas. In particular, there remains a need for a method of generation of a pressurized hydrogen gas from a chemical hydride, wherein the pressure of the generated hydrogen gas is sufficient to charge a hydrogen storage canister. The present invention discloses a safe and effective system and/or method for the generation and storage of pressurized hydrogen for use, for example, in powering fuel cells, wherein the system is portable, does not require the use of a compressor to produce the desired pressure of hydrogen gas, and requires no significant power source. The pressurized hydrogen gas produced in accordance with the present invention is generated from the irreversible reaction of a chemical hydride, and is stored in a hydrogen storage canister.

### BRIEF SUMMARY OF THE INVENTION

In one embodiment, the present invention provides a system for the generation and storage of pressurized hydrogen gas, comprising:
a. a hydrogen gas generator which comprises a first compartment comprising at least one chemical hydride; and
b. a hydrogen storage canister in fluid communication with the at least one hydrogen conditioner.

In one embodiment, the system further comprises at least one hydrogen conditioner in fluid communication with the hydrogen gas generator and the hydrogen storage canister.

In one embodiment, the at least one chemical hydride is in the form of a solid.

In one embodiment, the hydrogen gas generator comprises a second compartment, the second compartment comprising an aqueous solution, the first compartment being in selective fluid communication with the second compartment.

In another embodiment, the first compartment is disposed in a first container and the second compartment is disposed in a second container, the first container being in selective fluid communication with the second container.

In another embodiment, the hydrogen gas generator further comprises a promoter.

In one embodiment, the at least one chemical hydride is in the form of a solution.

In one embodiment, the hydrogen gas generator comprises a second compartment, the second compartment comprising at least one promoter, the first compartment being in selective fluid communication with the second compartment.

In another embodiment, the first compartment is disposed in a first container and the second compartment is disposed in a second container, the first container being in selective fluid communication with the second container.

In another embodiment of the invention, the hydrogen gas is produced by the hydrogen gas generator at a pressure sufficient to fill a metal hydride hydrogen storage reservoir or canister.

In yet another embodiment of the invention is provided a system for charging metal hydride hydrogen storage canisters, the system comprising a hydrogen gas generator and a conditioner in selective fluid communication with the hydrogen gas generator and the metal hydride hydrogen storage canister, wherein hydrogen gas produced by reaction of at least one chemical hydride is conditioned prior to transfer from the hydrogen gas generator to the metal hydride storage reservoir.

In another embodiment of the invention is provided an apparatus for recharging hydrogen storage reservoirs, wherein the apparatus is capable of being readily transported.

In yet another embodiment of the invention is provided a method for generating and storing pressurized hydrogen gas, comprising the steps of:
a. irreversibly generating pressurized hydrogen gas by a chemical reaction of at least one chemical hydride; and
b. collecting and storing the pressurized hydrogen gas in a hydrogen storage canister.

In another embodiment, the method for generating and storing pressurized hydrogen gas further comprises passing the pressurized hydrogen gas formed by a chemical reaction of at least one chemical hydride through a hydrogen conditioner.

### BRIEF DESCRIPTION OF SEVERAL VIEWS OF THE DRAWINGS

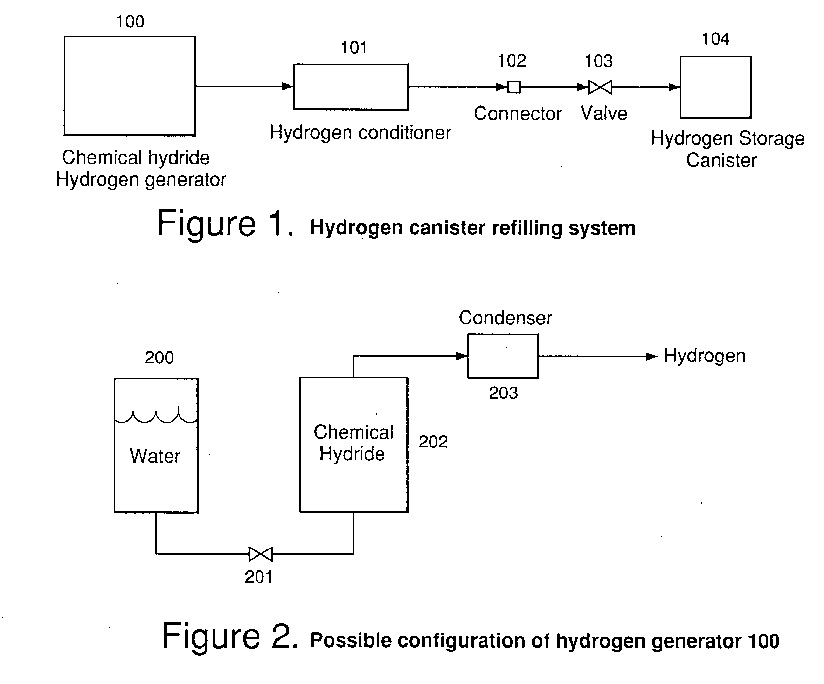

Figure 1 shows a cross-section of a preferred embodiment of a system for the generation of hydrogen for charging a hydrogen storage canister. The system comprises a hydrogen generator 100, a hydrogen conditioner 101, connecting means 102 for reversibly coupling a hydrogen storage canister to the hydrogen conditioner, a valve 103, and a hydrogen storage canister 104. Pressurized hydrogen gas is generated in the hydrogen generator, and is conditioned in the conditioner to remove impurities. The conditioned hydrogen gas then flows through the open valve and is collected and stored in the hydrogen storage canister. When the hydrogen storage canister is filled, the valve is closed and the hydrogen storage canister is disconnected from the hydrogen generator and conditioner.

Figure 2 shows another embodiment of the hydrogen generator 100, comprising a first container 202 for the storage of at least one chemical hydride and, optionally, one or more promoters, a second container for the storage of aqueous solution or ammonia 200, a valve 201, and a condenser 203. Pressurized hydrogen gas is generated by opening the valve to allow the flow of aqueous solution or ammonia from the second container into the first container where it contacts the chemical hydride. Pressurized hydrogen gas generated by the reaction of chemical hydride and aqueous solution or ammonia flows through the condenser, which removes water vapor, and optionally other impurities, contained in the hydrogen. On exiting the condenser, further conditioning of the hydrogen gas may be effected prior to its storage in a hydrogen storage canister.

### DETAILED DESCRIPTION OF THE INVENTION

The present invention relates to a system for the generation and storage of pressurized hydrogen gas without the use of a compressor or significant energy input, for use in the charging of a hydrogen storage canister. The term "charging", as defined herein, is understood to mean filling or refilling a hydrogen storage canister. The present invention further relates to methods for the generation of pressurized hydrogen gas and storage of the pressurized hydrogen gas in hydrogen storage canisters. The term "pressurized", as defined herein, is understood to mean a pressure sufficient to bring about the filling of a hydrogen storage unit or canister. Typically, the pressure necessary for the filling of a hydrogen storage canister is at least about 5 psig. Typically, the pressure of the hydrogen gas generated according to the present invention is at least about 5 psig to about 1000 psig or higher. Preferably, the pressure of the hydrogen gas generated according to the present invention is at least about 50 psig, and most preferably at least about 200 psig.

The hydrogen gas is generated by a reaction involving the use of a chemical hydride. The term "chemical hydride", as defined herein, is understood to mean a material or materials that liberate hydrogen in an irreversible reaction.

The generation of hydrogen gas according to the present invention is effected by the irreversible reaction of at least one chemical hydride with a suitable material and/or under suitable conditions. Suitable materials include, but are not limited to, liquid or gaseous aqueous solutions and liquid and gaseous ammonia. The term "aqueous solution", as defined herein, is understood to include water, aqueous acidic solutions, neutral aqueous solutions and basic aqueous solutions. The term "solution", as defined herein is understood to include liquid systems, gaseous systems, gels, suspensions, colloids, slurries, emulsions and the like, and mixtures of any two or more of the foregoing. Suitable conditions to effect the reaction include, but are not limited to heating the at least one chemical hydride. The chemical hydrides utilized in the system of the invention may or may not include hydride ions, and may be of any suitable physical form, including, but not limited to, solid, liquid and aqueous solution.

Methods for the production of hydrogen gas from chemical hydrides are known in the art. United States Published Application No. 2003/0037487, the contents of which are incorporated herein by reference in their entirety for all purposes, discloses such a method for hydrogen gas production wherein an aqueous solution of chemical hydride is passed over a promoter. United States Patent No. 3,174,833 the contents of which are incorporated herein by reference in their entirety for all purposes, discloses a method wherein the chemical hydride, optionally mixed with a promoter, and an aqueous solution are stored in separate containers. To produce hydrogen, the aqueous solution flows into the container of chemical hydride.

One preferred embodiment of the present invention comprises a system for generating pressurized hydrogen gas for charging a metal hydride hydrogen storage unit, the pressurized hydrogen being generated by reacting a solid chemical hydride with an aqueous solution. The system comprises a hydrogen generator which comprises fuel materials, including at least one chemical hydride, for the generation of hydrogen and a hydrogen storage canister. Optionally, the system further comprises at least one hydrogen conditioner in fluid communication with the hydrogen gas generator and the hydrogen storage canister. Optionally, the system further comprises a heat exchanger in thermal communication with the hydrogen storage canister to remove heat from the hydrogen storage canister during transfer of hydrogen gas. In certain embodiments, the system is capable of being readily transported, being contained in a housing of less than about 2 cubic meters, and having a weight of less than about 100 kilograms.

In one embodiment, the hydrogen gas generator comprises a container comprising two or more compartments, the compartments being in selective fluid communication with each other. The term "selective fluid communication" as used herein, is understood to mean that the compartments are isolated from each other when so desired and in fluid communication with each other when so desired. For example, the first compartment and the second compartment of the generator are isolated from each other until generation of hydrogen gas is required, at which time the first and second compartments can be placed in fluid communication by the use, for example, by a valve. The compartments may be separated from each other by any suitable means, including, but not limited to, an impermeable dividing barrier. The impermeable dividing barrier may be prepared from any suitable material known in the art. Suitable dividing barrier materials are known to one of skill in the art and include, but are not limited to polymers such as nylon, teflon, polyethylene, polypropylene and the like.

In one embodiment, the hydrogen generator comprises a first compartment which comprises at least one chemical hydride, and a second compartment which comprises an aqueous solution or ammonia. The first compartment is in selective fluid communication with the second compartment. The aqueous solution may be a solution of any suitable chemical material. For example, the aqueous solution may be an acidic, neutral or basic aqueous solution or may be a solution of at least one suitable promoter. As described above, the chemical hydride may be in the form of a solid, a liquid or an aqueous solution, wherein at least a portion of the chemical hydride is in the form of a solution. One or more promoters may be added as described in greater detail in this specification. One or more compartments of the generator are maintained at an elevated pressure. Preferably, at least the second compartment, comprising an aqueous solution or ammonia, is maintained at higher pressure than the pressure of the first compartment. Preferred pressures for the compartments of the generator of the present invention are from about 5 psig to about 1000 psig or higher. A most preferred pressure is from about 50 psig to about 300 psig.

When hydrogen gas is required, the selective fluid communication between the first compartment and the second compartment causes the contents of the first compartment to be contacted by the pressurized contents of the second compartment, and a reaction takes place to generate pressurized hydrogen gas. The activation of the selective fluid communication may be effected by any suitable means, for example, by opening a valve between the first and second compartments.

In another embodiment, the hydrogen generator comprises a first compartment which comprises a promoter or combination of promoter materials, and a second compartment which comprises an aqueous solution comprising at least one chemical hydride, wherein at least a portion of the at least one chemical hydride is in the form of a solution. As described herein, the term "promoter" is understood to mean a material which affects the rate of a reaction without itself being consumed. The term "promoter" is understood to include initiators, catalysts and the like. The aqueous solution may be acidic, neutral or basic, and optionally may contain at least one suitable promoter. As described above, one or more compartments of the generator are maintained at an elevated pressure. Preferably, at least the second compartment, comprising the aqueous solution comprising at least one chemical hydride, is maintained at elevated pressure.

In another embodiment of the invention, the system comprises a hydrogen generator, at least one conditioner and a hydrogen storage canister, wherein the hydrogen generator comprises first and second containers. The first container comprises at least one chemical hydride. The at least one chemical hydride can be supplied in the form of a solid, a liquid or an aqueous solution, wherein at least a portion of the chemical hydride is in the form of a solution. Optionally, the at least one chemical hydride can be supplied in combination with a suitable promoter. The second container contains an aqueous solution or ammonia in an amount sufficient to react with the chemical hydride fuel material of the first container. The aqueous solution may be an acidic aqueous solution, a basic aqueous solution or may be a solution of at least one suitable promoter. The second container can be of any suitable form, such as a tank or a reservoir, and is in selective fluid communication with the first container. The second container is maintained so that, when it is desired to operate the apparatus and produce hydrogen gas, its contents flow into the first container. The aqueous solution or ammonia may be caused to flow from the second container into the first container by any suitable means known to one of skill in the art. In one embodiment, the contents of the second container are maintained at an elevated pressure relative to the pressure of the first container, so that when the contents of the second container are released they will flow into the first container. In another embodiment, the second container is elevated relative to the first container, so that, when released, gravitational force causes the contents of the second container to flow into the first container.

In another embodiment of the present invention, the system comprises a hydrogen generator comprising first and second containers, a conditioner and a hydrogen storage canister. The first container comprises one or more promoter materials, while a second container comprises an aqueous solution comprising at least one chemical hydride, wherein at least a portion of the chemical hydride is in the form of a solution. The aqueous solution may be acidic, neutral or basic, and optionally may contain a suitable promoter. In one embodiment, the second container comprising the aqueous solution comprising at least one chemical hydride is maintained at an elevated pressure with respect to the first container. The elevated pressure is sufficient to cause the contents of the second container to flow into the first container upon activation of the system. In another embodiment, the container comprising the aqueous solution comprising at least one chemical hydride is positioned above the first container so that when the aqueous solution is released, gravity causes it to flow into the first container. The reaction can be initiated via activation of a valve to cause the aqueous solution to flow from the second container into the first container, and thus to contact the promoter material within the first container. The promoter or promoters effects the initiation of a reaction between the at least one chemical hydride and the aqueous solution, thus generating pressurized hydrogen gas. Typically, the hydrogen gas is generated at a pressure of at least about 5 psig. Preferably, the hydrogen gas generated has a pressure of at least about 50 psig, and more preferably at least about 200 psig. As in the embodiment described above, the generated pressurized hydrogen gas flows to a hydrogen conditioner which removes residual water vapor, and is subsequently stored in a hydrogen storage canister.

In another embodiment of the present invention is provided a method for the generation of pressurized hydrogen gas, and the storage of the pressurized hydrogen gas. The method comprises the steps of generating pressurized hydrogen gas by the irreversible reaction of at least one chemical hydride, followed by collecting and storing the pressurized hydrogen gas in a hydrogen storage canister.

In another embodiment of the present invention is provided a method for the generation of pressurized hydrogen gas, and the storage of the pressurized hydrogen gas in a hydrogen storage canister. The method comprises the steps of contacting at least one chemical hydride with an aqueous solution or ammonia to form pressurized hydrogen gas. The reaction is effected in a hydrogen gas generator. The at least one chemical hydride can be supplied in the form of a solid, a liquid or an aqueous solution, wherein at least a portion of the chemical hydride is in the form of a solution. Optionally, the at least one chemical hydride can be contacted with one or more suitable promoters. In one embodiment, the aqueous solution can be an acidic aqueous solution, a basic aqueous solution or a neutral aqueous solution, and may optionally comprise one or more promoters. The chemical hydride and aqueous solution are contained within separate compartments, as described above, until pressurized hydrogen gas is needed. Following initiation of the reaction, pressurized hydrogen gas is generated. The pressurized hydrogen gas thus generated passes through a hydrogen conditioner, wherein impurities such as water vapor, carbon monoxide and/or borates are removed. The pressurized hydrogen gas is then collected and stored in a hydrogen storage canister.

In another embodiment of the present invention is provided a method for the generation of pressurized hydrogen gas, and the storage of the pressurized hydrogen gas in a hydrogen storage canister. The method comprises the steps of contacting an aqueous solution comprising at least one chemical hydride, wherein at least a portion of the chemical hydride is in the form of a solution, with a promoter or promoters to form pressurized hydrogen gas. The reaction is effected in a hydrogen gas generator. Optionally, the aqueous solution comprising at least one chemical hydride can be contacted with one or more suitable promoters. The aqueous solution comprising at least one chemical hydride can be an acidic aqueous solution, a basic aqueous solution or a neutral aqueous solution, and may optionally comprise one or more promoters. The aqueous solution comprising at least one chemical hydride and the promoter are contained within separate compartments, as described above, until pressurized hydrogen gas is needed. Following initiation of the reaction, pressurized hydrogen gas is generated. The pressurized hydrogen gas thus generated passes through a hydrogen conditioner, wherein impurities such as water vapor, carbon monoxide and borates are removed. The pressurized hydrogen gas is then collected and stored in a hydrogen storage canister.

The reaction of chemical hydride and an aqueous solution or ammonia leads to the production of pressurized hydrogen gas. The pressure of the evolved hydrogen gas may be selected by application of suitable pressurization of the aqueous solution in the second container. Typically, the hydrogen gas is generated at a pressure of from about 5 psig to about 1000 psig or higher. Preferably, the hydrogen gas generated has a pressure of at least about 200 psig.

Specific examples of suitable chemical hydrides include, but are not limited to, ammonia borane (NH₃BH₃), sodium borohydride, lithium borohydride, sodium aluminum hydride, lithium aluminum hydride, lithium hydride, sodium hydride, calcium hydride, magnesium hydride, aluminum metal, magnesium metal and magnesium/iron alloys. The above chemical hydrides may be used individually or as mixtures of more than one chemical hydride, and a promoter can be used to facilitate the production of hydrogen gas.

The chemical hydrides used in the system and method of the present invention can be supplied in combination with a promoter. Preferably, if a promoter is present, the promoter is mixed with the chemical hydride material. Suitable promoters for the reaction of metal hydrides with an aqueous solution are known to one of skill in the art. Such promoters include, but are not limited to, transition metals, transition metal borides, alloys of these materials, and mixtures thereof. Transition metal promoters useful in the promoter systems of the present invention are described in U.S. Pat. No. 5,804,329, issued to Amendola, which is incorporated herein by reference in its entirety for all purposes. Transition metal promoters, as used herein, are promoters containing Group IB to Group VIIIB metals of the periodic table or compounds made from these metals. Examples of useful transition metal elements and compounds include, but are not limited to, ruthenium, iron, cobalt, nickel, copper, manganese, rhodium, rhenium, platinum, palladium, chromium, silver, osmium, iridium, alloys thereof, salts thereof including chlorides and borides, and mixtures thereof. Preferred salts include cobalt chloride, iron chloride and nickel chloride. Preferred promoters used in present invention preferably have high surface areas. One of skill in the art will recognize that the high surface area of the promoters used in the present invention corresponds to the promoters having, on average, small particles size. The promoter may be any structural physical form, for example a monolith.

In certain embodiments, the pressurized hydrogen gas produced in the generator passes through a conditioner which is in fluid communication with the generator. In the present invention, the term "conditioner" is understood to mean an apparatus for the removal of impurities from the generated hydrogen gas. Impurities include, but are not limited to water, carbon monoxide and borates. Conditioners include, but are not limited to driers, condensers and purifiers. The conditioner preferably removes any water vapor which is contained in the hydrogen gas. The use of a conditioner is typically necessitated because water-sensitive materials, such as metal hydrides, can be used to construct the hydrogen storage canister. The hydrogen gas can be dried either prior to storage in the hydrogen storage canister, or during the filling of the storage canister. The conditioner can consist of a vessel which comprises one or more desiccant materials. Such materials include, but are not limited to, molecular sieve adsorbents, activated carbon adsorbents, activated alumina adsorbents, silica, CaCl₂, or Ca(SO₄)₂, available commercially as Drierite, manufactured by W.A. Hammond Drierite Co. Ltd. After extended use, the conditioner may become saturated with water and must be regenerated or replaced.

The hydrogen storage canister is adapted to store pressurized hydrogen gas, and can be of any suitable physical configuration. Typically, the hydrogen storage canister is a rigid pressurized canister. Several different types of hydrogen storage canisters can be used with the present invention. Suitable hydrogen storage canisters include, but are not limited to, metal hydride canisters; carbon based storage canisters, including carbon nanotubes; and compressed gas cylinders. Suitable metal hydrides include metal hydrides of AB, AB₂ and AB₅ type. AB is a type of metal hydride in which the ratio of A atom to B atom is 1:1; while for AB₂ the ratio is 1:2, and for AB₅ the ratio is 1:5. Typically, A is a rare earth metal such as lanthanum or a mixture of rare earth metals, known as a mischmetal. Typically, B is nickel or an alloy that is composed mainly of nickel. Preferred metal hydrides include, but are not limited to, TiFe, Ti_{0.98}Zr_{0.02}V_{0.43}Fe_{0.09}Cr_{0.05}Mn_{1.5} and MmNi₅, wherein Mm represents a mischmetal.

The hydrogen storage canister can be further adapted so as to be able to deliver hydrogen gas to a fuel cell. The fuel cell can be optionally connected to the hydrogen storage canister, and the hydrogen gas transferred to the fuel cell via a valve or a regulator.

The present invention is not to be limited in scope by the specific embodiments described herein. Indeed, various modifications of the invention in addition to those described herein will become apparent to those skilled in the art from the foregoing description and the accompanying figures. Such modifications are intended to fall within the scope of the appended claims.

All references cited herein are hereby incorporated herein by reference in their entirety for all purposes.

## Claims

1. A system for generation and storage of pressurized hydrogen gas, comprising:
(a) a hydrogen gas generator which comprises:
a first compartment comprising at least one chemical hydride; and
(b) a hydrogen storage canister in fluid communication with the hydrogen generator.

2. The system of claim 1, wherein the at least one chemical hydride is in the form of a solid.

3. The system of claim 2, wherein the hydrogen gas generator further comprises a second compartment comprising an aqueous solution.

4. The system of claim 1, wherein at least a portion of the at least one chemical hydride is in the form of a solution.

5. The system of claim 4, wherein the solution is selected from an aqueous solution and ammonia.

6. The system of claim 1 or 5, further comprising at least one hydrogen conditioner in fluid communication with the hydrogen gas generator and the hydrogen storage canister.

7. The system of claim 6, wherein the hydrogen conditioner is selected from the group consisting of a condenser, a drier, a purifier and combinations of any two or more thereof.

8. The system of claim 7, wherein the hydrogen conditioner comprises a vessel which contains one or more desiccant materials.

9. The system of claim 8, wherein the one or more desiccant materials are selected from the group consisting of zeolites, molecular sieve adsorbents, activated carbon adsorbents, activated alumina adsorbents, silica, CaS, CaCl₂, Ca(SO₄)₂ and mixtures of any two or more of the foregoing.

10. The apparatus of claim 1, wherein the chemical hydride is selected from the group consisting of sodium borohydride, lithium borohydride, sodium aluminum hydride, lithium aluminum hydride, lithium hydride, sodium hydride, calcium hydride, magnesium hydride, aluminum metal, magnesium metal, magnesium/iron alloys and mixtures of any two or more of the foregoing.

11. The system of claim 5, wherein the hydrogen gas generator further comprises at least one promoter.

12. The system of claim 11, wherein the at least one promoter is in selective fluid communication with the aqueous solution.

13. The system of claim 11, wherein the hydrogen gas generator further comprises a second compartment comprising at least one promoter.

14. The system of claim 3, wherein the aqueous solution in the second compartment is at a pressure greater than the pressure of the first compartment.

15. The system of claim 3, wherein the hydrogen gas generator further comprises at least one promoter.

16. The system of claim 1, 3 or 5, further comprising a heat exchanger in thermal communication with the hydrogen storage canister.

17. The system of claim 3 or 13, wherein the first compartment is disposed in a first container and the second compartment is disposed in a second container, and wherein the first container is in selective fluid communication with the second container.

18. The system of claim 3 or 13, wherein the first and second compartments are disposed within a single container, and wherein the first compartment is in selective fluid communication with the second compartment.

19. The system of claim 3 or 5, wherein the hydrogen gas generator is capable of generating hydrogen gas having a pressure sufficient to fill a hydrogen storage canister.

20. The system of claim 3 or 5, wherein the hydrogen gas generator is capable of generating hydrogen gas having a pressure of at least about 50 psig.

21. The system of claim 3 or 5, wherein the hydrogen storage canister comprises at least one metal hydride of a type selected from the group consisting of AB, AB₂ and AB₅.

22. The system of claim 21, wherein at least one metal hydride is selected from the group consisting of TiFe, Ti_{0.98}Zr_{0.02}V_{0.43}Fe_{0.09}Cr_{0.05}Mn_{1.5} and MmNi₅, wherein Mm is a mischmetal .

23. A method for generating and storing pressurized hydrogen gas, comprising the steps of:
(a) irreversibly generating pressurized hydrogen gas by a chemical reaction of at least one chemical hydride; and
(b) collecting and storing the pressurized hydrogen gas in a hydrogen storage canister.

24. The method of claim 23, further comprising passing the pressurized hydrogen gas formed in step (a) through a hydrogen conditioner prior to collecting and storing the pressurized hydrogen gas in a hydrogen storage canister.

25. The method of claim 23, wherein the at least one chemical hydride is in the form of a solid.

26. The method of claim 25, wherein the generating step comprises contacting at last one chemical hydride with a material selected from the group consisting of an aqueous solution and ammonia.

27. The method of claim 25 wherein the generating step comprises heating the at last one chemical hydride.

28. The method of claim 23, wherein at least a portion of the at least one chemical hydride is in the form of a solution.

29. The method of claim 28 wherein the solution is an aqueous solution.

30. The method of claim 25 or 28, wherein the generating step comprises contacting at last one chemical hydride with a promoter.
